# EUROPEAN PATENT SPECIFICATION

(11) **EP 2 234 754 B1**
(45) Date of publication and mention of the grant of the patent: **14.08.2013**
(21) Application number: 08870783.1
(22) Date of filing: 18.12.2008
(51) Int. Cl.: B23Q 7/00, B23Q 3/10

(54) **HOLDER**
HALTER
SUPPORT

(30) Priority: 17.01.2008 SE 0800110; 31.01.2008 SE 0800244
(43) Date of publication of application: 06.10.2010
(73) Proprietor: Flexprop AB, 302 41 Halmstad (SE)
(72) Inventor: STRÖMBERG, Karl-Otto, S-302 40 Halmstad (SE)
(74) Representative: Rosenquist, Per Olof
(86) International application number: PCT/SE2008/000721
(87) International publication number: WO 2009/091298

(56) References cited:
- DE-A1-102006 043 414
- DE-A1-102006 043 414
- SE-A- 0 002 025
- US-A1- 2003 213 328

## Description

### TECHNICAL FIELD

The present invention relates to a holder for positioning and positionally fixing a workpiece in relation to a fixed point or another workpiece **as described in the** preamble **of claim 1**.

The present invention also relates to a method of manufacturing a holder for positioning a workpiece in relation to a fixed point or another workpiece **as defined in the** preamble **of claim** 8.

### BACKGROUND ART

Within many sectors of industry, and as a typical example mention might be made of the automotive industry, there is often a need to be able to position in an accurate state a workpiece in relation to a reference point or another workpiece.

In such instance, holders are often put into use on which there are grippers for cooperation with the individual workpiece. These holders are often called manipulators. A distinction is often made between geometrically controlling manipulators and non-geometrically controlling manipulators. As regards the requirements on precision, these are considerably stringent concerning geometrically controlling manipulators, for which reason the tolerances often lie within one or a few tenths of a millimetre, while considerably more liberal tolerances can be accepted as regards non-geometrically controlling manipulators.

In, for example, a press line for producing vehicle body parts, a planar sheet metal blank is fed by means of some type of feeder which is provided with manipulator and gripper, which feeds the blanks into the press included in the first press line. When this has carried out its working stroke, the partly processed workpiece is removed by a second feeder, which may be a specifically designed feeder or a generally applicable industrial robot. This feeder or robot also displays a manipulator with gripper which transfers the workpiece from the first to the second press included in the press line. If the press tool in the second press is provided with means for accurately guiding the partly processed workpiece to the correct processing position, the manipulator on the feeder or the robot may be of the non-geometrically controlling type. If however, there are no such guide means in the press tool in the second press, the feeder or robot and the manipulator associated therewith must, in an extremely accurate manner, position the workpiece in the press tool in the second press.

Another situation where similar requirements are placed is a workstation where, for example, a plurality of body parts is assembled by welding. Here, there may be a stationary holder in which the different workpieces are placed. Such a stationary holder may also be designated a manipulator. For feeding the different workpieces to the stationary holder, use may be made of universally applicable robots which, in such an event, are provided with manipulators and grippers.

Traditionally, holders of the type under consideration here have often been constructed as framework systems consisting of steel or aluminium. In such instance, both tubular and profile material have been used, but also sheet- and beam constructions have occurred in the art

As regards holders produced from steel, these possess good rigidity, but, in relation to their size, much too high a mass. A high mass implies that the workrate in the motion apparatus or the industrial robot which is to operate the holder cannot be increased appreciably, since the acceleration and deceleration forces will be too great.

As regards aluminium, in relation to steel, it has low density but suffers often from excessive flimsiness so that major flexing may occur under loading. In a rapidly operating feeder or robot, this is not acceptable, since the flexing implies the risk of oscillation phenomena, which jeopardise the accurate positioning of the workpiece.

It is also previously known in the art to produce, from a tubular or profile material, holders of the type under consideration here, where the tubular or profile material consists of composite material, primarily carbon fibre composite. Such a material enjoys considerably greater rigidity than aluminium, and also has a density which is considerably lower, roughly half. One example of a holder of this type is illustrated in SE 518 227 C2.

DE 10 2006 043 414 A1 discloses a holder used when positioning or mounting together for example, vehicle body parts. The holder comprises an upper part and a lower part which both are planar on parallel to one another. The upper and lower parts are interconnected by means of spacers made from planar material, e g sheet metal or glass or carbon fibre reinforced plastic. The upper and lower parts are made from steel sheet metaL

The spacers form together a boxlike structure where the spacers are connected together by means of slots.

The upper part has a mounting flange for connecting the holder to an industrial robot. Further there are mounting plates for fastening different kinds of additional equipment, e g grippers.

Mounting together the different components of the holder could be done by welding or gluing.

Welding is inherently a process that results in bad accuracy and warps. Further, according to the German document, there is no means for positioning with a high degree of accuracy, the different components during the gluing process. *The construction of the material pieces allow for several arbitrary positions thereof, when they are assembled into a holder*.

### PROBLEM STRUCTURE

The present invention has for its object to design the holder intimated by way of introduction such that it will display extremely great rigidity, high precision and low weight.

Concerning the method, the present invention has for its object to formulate the method so that corresponding objects are attained.

### SOLUTION

The objects forming the basis of the present invention will be attained concerning the holder **if it is given the features of the characterising part of claim 1**.

Concerning the method, the objects of the present invention will be attained if the method is **given the characteristics of claim 8.**

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: is a perspective view of a first embodiment of the holder according to the present invention, together with a partial magnification;
- Fig. 2: shows an alternative embodiment of the holder according to the present invention;
- Fig. 3: shows a third embodiment of the holder according to the present invention, with accessories;
- Fig. 4: is an exploded diagram of an embodiment of the present invention slightly modified in relation to Fig. 1, together with a partial magnification;
- Fig. 5: shows a component included in the holder according to Fig. 4;
- Fig. 6: shows the embodiment according to Fig. 1 in the partly finished state, together with a partial magnification;
- Fig. 7: shows the holder according to Fig. 6 in perspective, and devoid of one of the outer material, pieces, together with a partial magnification;

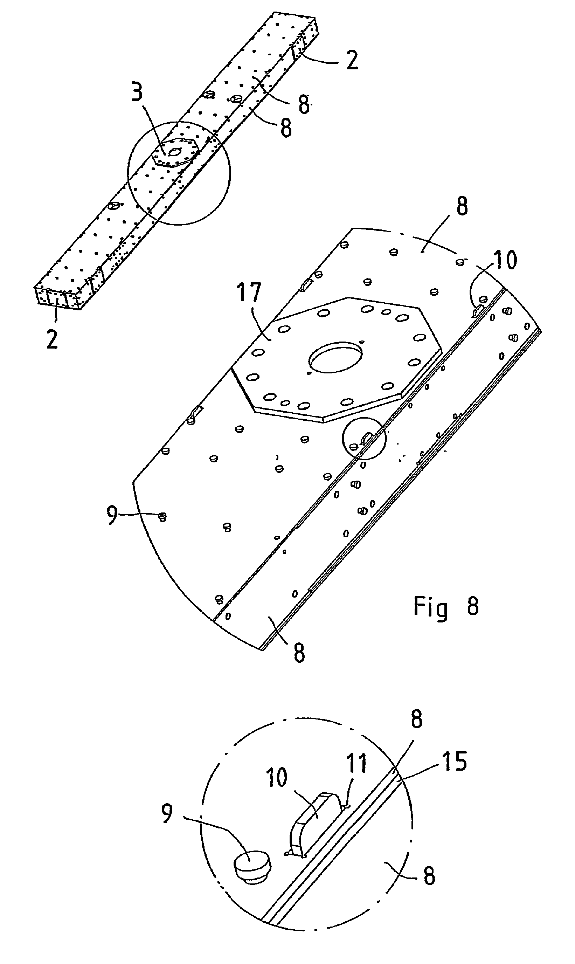

- Fig. 8: shows the holder according to Fig. 6 together with two partial magnifications; and
- Fig. 9: shows a unit included in the holders according to Figs. 1, 4, 6, 7 and 8 for mounting of a fixing device or a fixing apparatus.

### DESCRIPTION OF PREFERRED EMBODIMENT

The holder or manipulator according to the present invention is, as was intimated above, intended, on the one hand, to be able to stationarily disposed and constitute a jig or a fixture, for example in the joining together of two workpieces. However, it is also designed to be movable and serve for fixedly retaining a workpiece, which, by some form of motion apparatus, for example an industrial robot, is displaced from one workstation to another. The above disclosure implies that, to the extent directional and positional indications are used in this description, these refer only to the positions or states shown in the Drawings, since the manipulator according to the present invention may, while in use, be optionally movable in three dimensional space.

In the following description and in the appended Claims, the expression 'fixing means' will be employed. Such a fixing means is taken to signify a means whose position and direction are well-defined in relation to other fixing means in the holder. However, the expression fixing means also encompasses per se the sense of a means for securing a fixing device, a fixing apparatus or the like for positionally fixing and retaining a workpiece in relation to the fixing means.

It should also be emphasised that both the configuration and the size of the manipulator may vary within broad limits and that, in the case under consideration here, are as a rule determined by the appearance of the workpiece or workpieces to be handled.

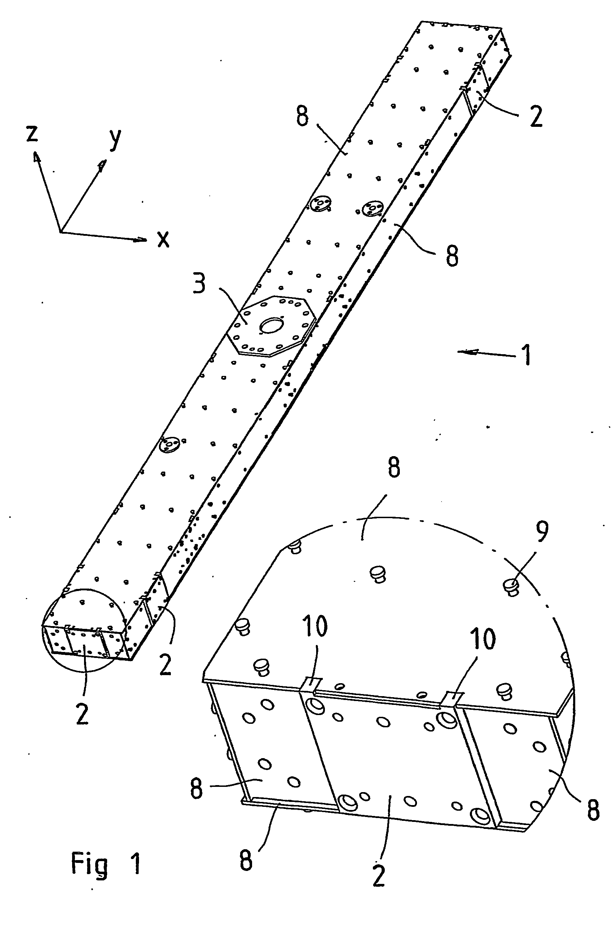

The holder or manipulator according to Fig. 1 has been given reference numeral 1 in its entirety and is in the form of a parallelepipedic, right-angled elongate beam. The holder or manipulator 1 has, in the illustrated embodiment three fixing means 2 visible in Fig. 1 for securing fixing device, fixing apparatuses or the like for cooperation with a workpiece, for instance by alignment thereof or retention thereof. These have positions and alignments which are accurately determined in relation to one another. The holder 1 has a further fixing means 3 shown on the Drawing, which has a well-defined position and alignment in relation to the three other illustrated fixing means 2. The fixing means 3 is designed for securing the holder or manipulator 1 on a motion apparatus, for example an industrial robot, and may therefore also be called a robot anchorage. The fixing means 3 may also be employed for stationary fixing of the holder or manipulator 1.

In Fig. 1, there is included a right angle coordinate system x, y, z. Corresponding coordinate systems may naturally also be drawn into the remaining Figures in order to facilitate an understanding of the directional- and positional disclosures. However, Fig. 1 is fully sufficient by way of illustration. The accurate positions and alignments of the fixing means 2 imply that they have well-known alignments and tolerances as regards pivoting or rotation about all axes of the coordinate system. In addition, the positions and tolerances along all axes are well-known.

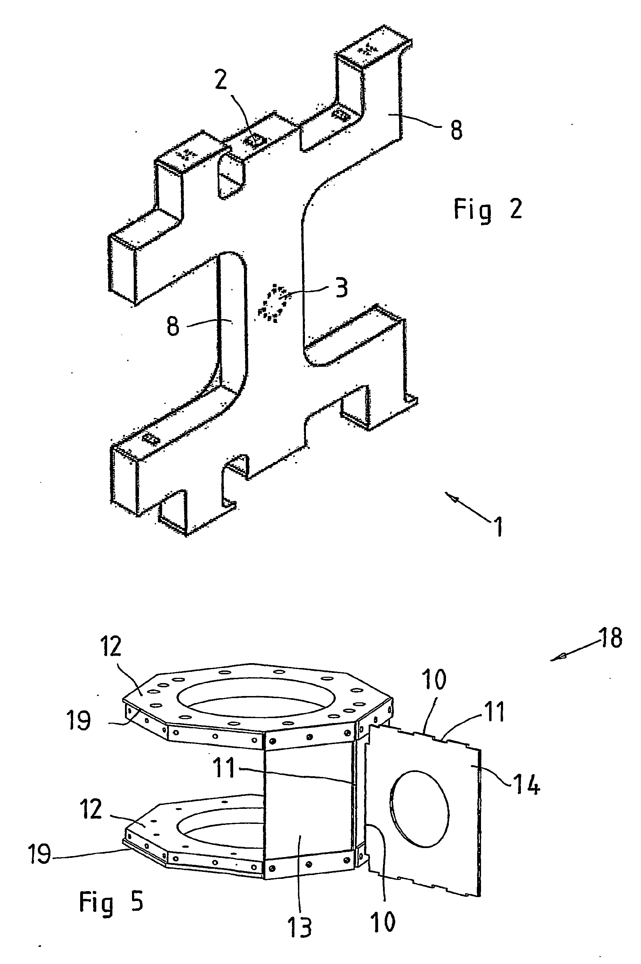

In the embodiment according to Fig. 2, the holder 1 is approximately H-shaped and is provided with a number of fixing means 2 for securing alignment devices, fixing devices, fixing apparatuses or the like for alignment and/or retention of a workpiece. The holder 1 is further provided with a fixing means 3 formed as a robot anchorage.

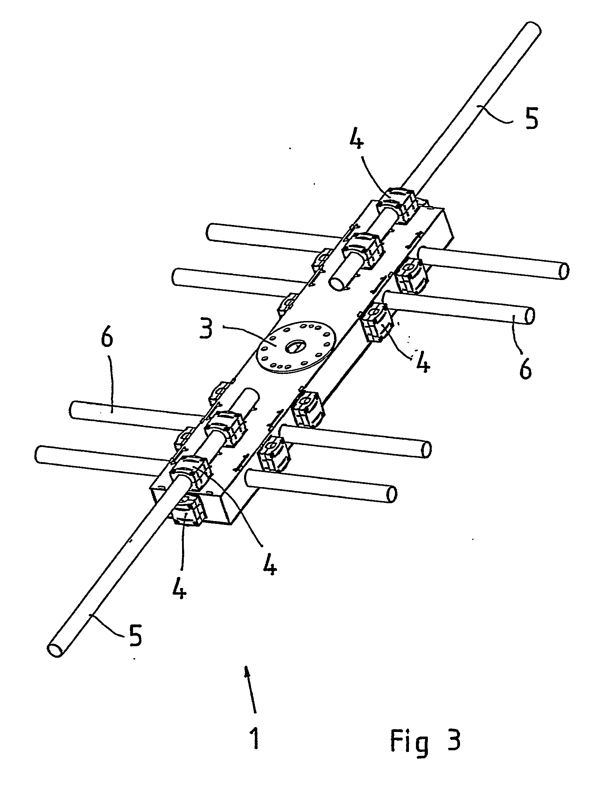

In the embodiment according to Fig. 3, the holder 1 comprises an elongate, parallelepipedic and right-angled beam, which a number of fixing means, of which the fixing means 3 is designed as a robot anchorage. On certain of the other fixing means of the beam, there are provided couplings 4 which may be used for fixedly securing accessories 5 of elongate bodies of profile material, preferably tubular profiles of carbon fibre laminate. The couplings 4 which serve for retaining the accessories 5 are, as was intimated above, secured on fixing means, which are concealed by the couplings 4 and so are not shown on the Drawings. This implies that the mutual positions of the couplings 4 and their positions in relation to the robot anchorage 3 will be well-defined. Further, the couplings 4 have well-known positions and tolerances principally on surfaces intended for securing on the fixing devices in relation to those surfaces which serve for securing the accessories 5.

According to the present invention, the accessories 5 serve for securing additional fixing means (not shown on the Drawings) which may be secured in optional but well-measured and calibrated positions along the length of the accessories. In such instance, use is made of couplings identical with or similar to the couplings 4 in Fig. 3. By such means, an extremely light and rigid manipulator may be assembled from a number of smaller components, where, from the robot anchorage 3 to a part fixedly held by a coupling 4, there is an unbroken chain of well-known distances, pivots or rotations and tolerances.

The holder 1 according to Fig. 3 has the greater part of its couplings 4 mounted externally, but according to the present invention it is also possible to place inside the beam corresponding couplings, for example for the accessories 6. The corresponding situation also applies here for alignments, distances and tolerances.

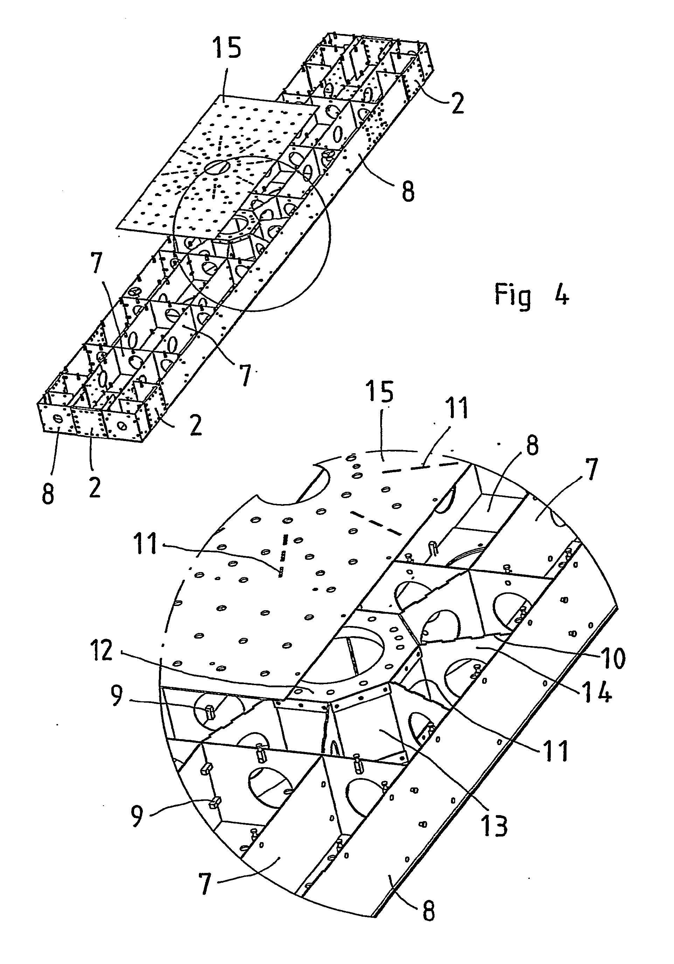

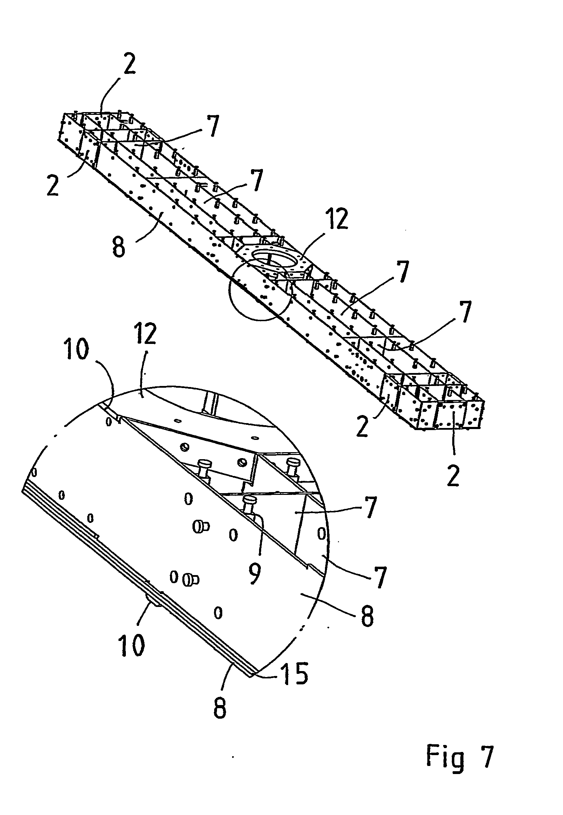

The holder or the manipulator 1 according to the present invention is, as is most clearly apparent from Figs. 4 and 7, composed of a number of substantially planar, disk-shaped inner material pieces 7 and a number of outer, substantially planar, disk-shaped material pieces 8. The inner material pieces 7 are interconnected to one another, so that a lozenge pattern is formed with a three-dimensional structure with a number of box-shaped, substantially closed formations. The partitions in these formations may have lead-ins or holes for wiring or conduits for other purposes. Further, edge surfaces or edge regions of the inner material pieces are connected to the outer material pieces 8. The inner material pieces 7 may be said to be both longitudinal and transverse, possibly at right angles. They may also be arranged in stellar configuration or as zigzag patterns or combinations of such patterns.

The disk-shaped material is, in one preferred embodiment, a laminate based on carbon fibres and an adhesive. The laminate is built up on a workbench utilising a partial vacuum which realises the necessary compression forces during the curing and setting time of the laminate. This manner of manufacture implies that the finished laminate will have flatness and tolerances on its side facing towards the workbench determined by the workbench surface proper, while the opposing side may suffer from defects.

The planar material pieces 7 and 8, but also other material pieces included in the construction, such as the material pieces 13, 14 and 15, are cut out with high precision, both as regards outer contours and such guide means 10 and 11 in the form of projecting pins or corresponding recesses or other apertures, respectively (e.g. for the mechanical coupling devices 9 described below) which are later used for mutual positioning of components included in the holder 1.

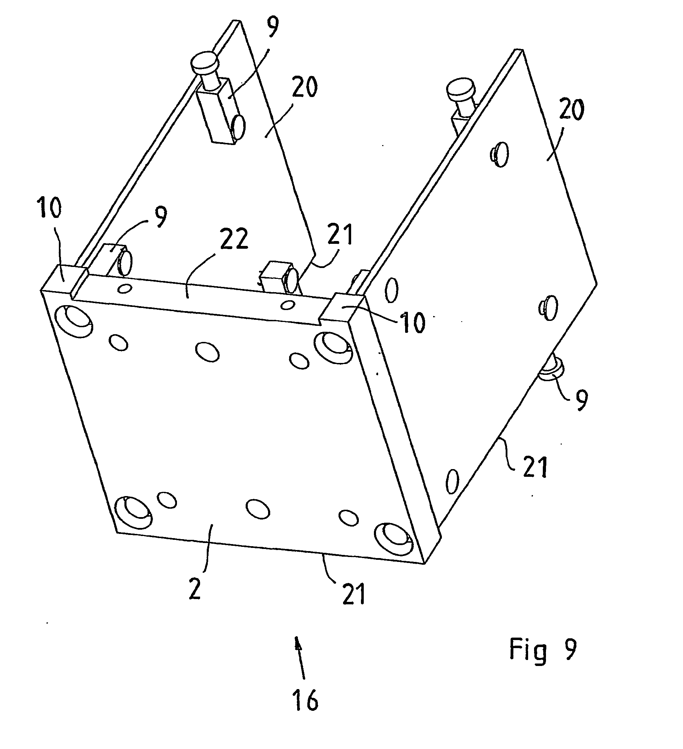

The inner material pieces 7 are mutually interconnected either by means of mechanical coupling devices 9 or by means of glue unions or combinations of both. As mechanical coupling devices 9, use may be made (Figs. 4 and 9) of small metal blocks which are fixed in the inner material pieces 7 by means of rivet- or screw unions, possibly together with glue unions. These metal blocks have threaded apertures for accommodating corresponding screws. Rivets may also be employed in this context. Such coupling devices 9 do not offer any high level of precision.

As examples of the mechanical coupling devices which also fulfil the function of guide means for accurate mutual positioning of closely adjacent parts, mention might also be made of projections or pins fitting in corresponding recesses or apertures, where the pins, regardless of shape, carry the generic reference numeral 10 while the recesses, regardless of shape, carry the generic reference numeral 11 (see Figs. 1, 5, 4 and 6). Corresponding mechanical coupling devices may also be employed according to the present invention between the fixing means 2 and 3 and closely adjacent material pieces 7 or 8. These guide means are produced by high precision machining both as regards dimensional accuracy, surface finish, alignment and positions.

As regards the coupling devices 9, these principally serve the purpose of holding together the subject matter of the present invention while under assembly, so that this can be handled without "falling apart", but also to create compression pressure when the glue unions are applied. The coupling devices 9 do not permit any major demand on precision. The coupling devices 9 further fulfil the function of preventing the generation of stresses in the construction, for example by shrinkages in the glue employed in the glue unions, in the event that mutually adjacent parts may possibly have small interstices or spaces which are bridged by the glue unions.

The coupling devices of the type comprising projections 10 or pins fitting in corresponding recesses 11 or apertures constitute guide means and serve the purpose of guaranteeing accurate joining together with extremely narrow tolerances of the material pieces 7, 8, 13, 14 and 15 included in the holder 1 and the fixing means 2 and robot anchorage 3.

It will be apparent from Figs. 4 and 5 taken together, that the fixing means 3, i.e. the fixing means which functions as robot anchorage, is combined to form a pre-assembled unit 18 which is integrated interiorly in the beam. A part of such a unit 18 is shown in Fig. 5, while the mounted unit is shown best in the partial magnification in Fig. 4. The unit consists of two metal rings 12 which are joined together by means of inner material pieces 13 standing upright. Tubes, rods or rings may also be employed for connecting the metal rings 12. Between adjacent material pieces 13, there inserted projections 10 on stellar-disposed inner material pieces 14, which, along opposing edges, have further projections 10 and corresponding recesses 11 for mechanical interconnection with a reinforcement plate 15. To this end, the reinforcement plate 15 has accurately positioned and dimensioned recesses or apertures 11 for accommodating corresponding projections 10 on the unit 18. The mechanical coupling devices between these components are finally positionally fixed by means of glue unions. The unit 18 extends between and unites opposing outer, at least upper and lower, material pieces 8 in the region of the robot anchorage 3.

It will be apparent from Fig. 5 that both of the metal rings 12 have, along their upper and lower edges, guide beads or strips 19 which are employed to realise mutual guiding between the metal rings and the inner material pieces 13 which are to interconnect them. For reasons of mechanical strength, the inner material pieces 13 are duplicated, and the outermost of them are so high (in the z-direction in Fig. 1) that they also cover the guide beads or strips 19.

The above-mentioned reinforcement plates 15, one upper and one lower, are provided, as is apparent from Fig. 4, with stellar-disposed slots 11 in which the pins of the stellar-disposed inner material pieces 14 guidingly engage. Further, the reinforcement plates 15 have, along their opposing longitudinal sides, slots 11 and projections 10 for cooperation with corresponding projections 10 on the longitudinal side edges 8 of the holder and with corresponding recesses or slots 11 therein, respectively.

In the foregoing, it was mentioned that the laminate material from which the holder 1 is manufactured only has its one side executed with good flatness. In addition, all of the lamellar material pieces included in the holder are cut out with high precision, for which reason all edge surfaces will display corresponding good precision. In order as far as possible to benefit from the "best" side of the laminate material, this side is, on the outer material pieces 8 included in the holder, turned to face inwards where it will come into cooperation with machined/cut out edge surfaces on the inner material pieces 7, 13 and 14.

Fig. 9 shows a fixing means 2 which comprises a metal plate with suitable alignment and fixing means for mounting of some apparatus which is designed, for example, for gripping and positioning of a workpiece handled by the holder 1. Along corresponding vertical edges of the metal plate, there is secured a support plate 20, so that there is formed a rigid, separate unit 16 which is right-angled and which forms a cuboid or parallelepipedic structure. In such instance, it should be noted that the lower edges 21 of the metal plate and the support plates lie in a common plane.

Along the upper side, the metal plate has a countersunk portion 22 which, at both of its ends, has upwardly directed projections 10. The countersunk portion 22 and the upper edges of the support plates 20 lie in a common plane which is parallel with the plane defined by the lower edges 21. In addition, the support plates have a number of mechanical coupling devices 9, on the one hand for joining together with the metal plate and on the other hand for joining together with the upper (lid) and lower (bottom)/outer material pieces 8 of the holder 1.

On construction of a holder 1 according to the invention, for the sake of simplicity reference will be made to the embodiment according to Fig. 1, but it will be obvious to the skilled reader that the embodiments according to other Figures are constructed in total analogy, the separate unit 16 shown in Fig. 9 and that unit 18 which per se includes the robot anchorage 3 of the holder being first joined together. The joining together of these components is carried out on an engineering workbench so that both of the units will have a completely planar underside.

The fixing means 2 and 3 are placed out on the workbench whereby their position in the vertical direction (the z-direction) is defined by the workbench. The workbench further defines the positions of rotation about the x-axis and the γ-axis. In this state, the positions in the x-direction and the γ-direction, as well as the position of rotation about the z-axis are still yet to be determined.

The inner material pieces 7, both longitudinal and transverse, or in another direction, are mutually joined together on the workbench so that the thus formed, box-shaped structure will have a completely planar underside, which is thus turned to face towards the workbench.

On application of the structures thus resting on the workbench, the fixing means 2 and 3 are aligned in the x- and γ-directions by the upper material piece 8 of the holder in Fig. 1, the lid, in that this is provided with recesses 11 in which the projections 10 on the metal plates included in the fixing means 2 fit and accurately orient the fixing means.

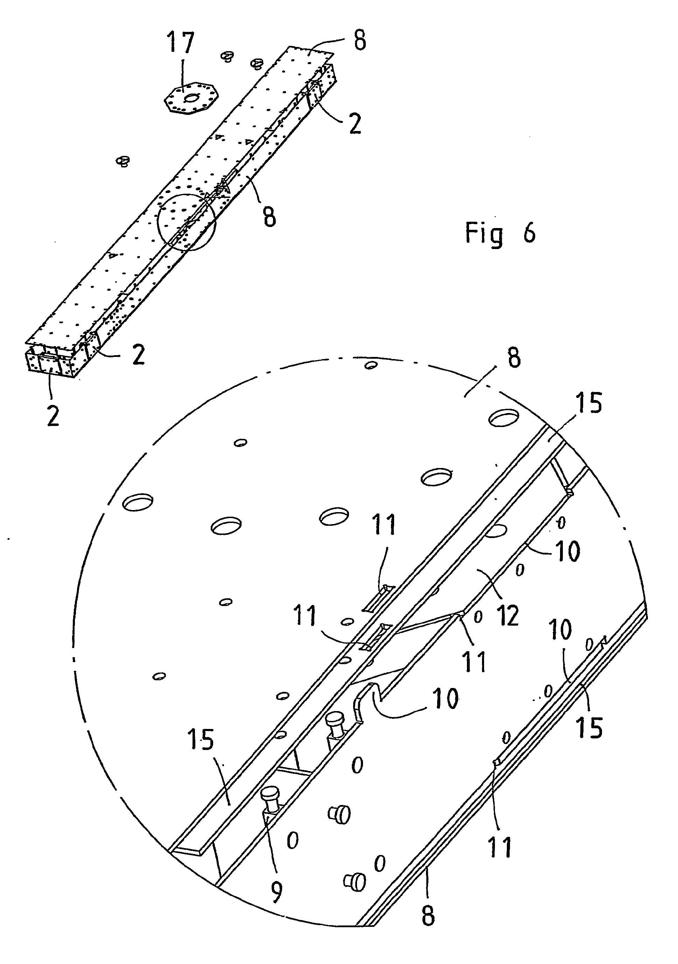

For alignment of the upper and lower outer material pieces 8 of the holder 1 on the Drawings, the outer, longitudinal material pieces (Fig. 6) have upwardly directed pins 10 which engage in corresponding recesses 11 both in the reinforcement plate 15 of the unit 18 and in the upper, outer material piece 8, the lid. Correspondingly, the unit 18 which includes the robot anchorage 3 has corresponding projections that engage in corresponding recesses in the outer material pieces 8.

Thus far as the assembly of the holder 1 has been described, its outer material pieces are mounted, the fixing means are mounted but the underside is still open. Further, the upper side 8 of the holder is not planar, since the mechanical coupling devices 9 extend up over the upper surface of the upper side. Moreover, the external surface on the lid displays no high level of precision.

In one embodiment, those projections 10 which are disposed on the longitudinal, outer side pieces 8 for the holder 1 are so high that they can serve for alignment of the entire beam when this is inverted and placed with the upper side turned to face downwards towards the workbench. The projections 10 are further so high that they permit mounting of the outer ring or outer plate 17 of the robot anchorage without this impeding the continued mounting operation.

In one alternative embodiment, it is possible to mount on the fixing means 2 elevation plates which have downwardly directed projections that are sufficiently high to provide the above-described function when the holder is inverted on the workbench and its bottom 8 is mounted in position.

The above-described mounting procedure implies that the mounting plates included in the fixing means 2 and the lid 8 are positioned in relation to one another. If the intention is also that the bottom is to be positioned as well within narrow tolerances in relation to the metal plates of the fixing means 2, at least one point, one line and one plane are required. These lines are defined by four points which connect to the metal plates included in the fixing means 2 and which guide the placing of the bottom in the x-direction and in the γ-direction.

The vertical position, the z-direction, is controlled with the aid of the above-mentioned elevation plate which controls the vertical position of the metal plate included in the fixing means 2 in relation to the workbench.

If the holder according to the present invention is to be provided with fixing means disposed on the upper side, which is the case in the embodiment according to Fig. 3, they are applied in the metal plates included in the fixing means 2, and which are intended to be positioned on the lid. The lid has holes which guide towards the outer contour of the metal plates. The hole in the lid guides the position in the x-direction and in the γ-direction, as well as the rotation about the z-axis. By moving down the metal plate included in the fixing means 2 in a direction towards the workbench or towards a surface parallel in relation to the workbench, the rotation about all axes is locked at the same time as the vertical direction, the z-direction, is determined. In order to obtain the requisite rigidity, the metal plate included in the fixing means 2 must normally be reinforced with a retrojacent structure, which is connected to the bottom of the holder 1. This retrojacent structure is suitably provided with pins which engage in corresponding holes or slots in the bottom in order to ensure satisfactory alignment and positioning.

## Claims

1. A holder for positioning and positionally fixing a workpiece in relation to a fixed point or another workpiece, comprising at least one fixing means (2, 3) for mounting a fixing device or a fixing apparatus, for positionally fixing the workpiece or for securing the holder (1), for example on a motion apparatus, the holder being composed of a number of inner, mutually interconnected planar, lamellar material pieces (7, 13, 14), and a number of outer planar, lamellar material pieces (8) interconnected to one another and to the inner material pieces, and together defining a substantially closed volume, and the connections between the individual material pieces comprising mechanical coupling devices (9, 10, 11) and in particular glue unions, wherein at least certain of the mechanical coupling devices comprises projections or pins (10) fitting in corresponding recesses or apertures (11), which constitute guide means, for accurate joining together of material pieces included in the holder and fixing means (2, 3) and alignment of the outer material pieces (8), **characterised in that** edge regions of the inner material pieces are connected to the outer material pieces, wherein the projections or pins (10) fit and engage in recesses (11) in the outer material piece, or lid, (8) of the holder.

2. The holder as claimed in Claim 1, **characterised in that** the outer material pieces (8, 15) are, via the glue unions, interconnected with the edge surfaces or edge regions of the inner material pieces (7, 13, 14).

3. The holder as claimed in any of Claims 2 or 3, **characterised in that** the fixing means (2, 3) are each disposed on a unit (16, 18, respectively); that the mechanical coupling devices (10, 11) on the units and one of the outer material pieces (8) are in engagement with one another for positional determination of the fixing means in relation to one another in the plane of the outer material piece.

4. The holder as claimed in any of Claims 1 to 3, **characterised in that** the fixing means (2, 3) comprise metal plates (12, 17) of greater material thickness than the material thickness in the lamellar material pieces (7, 8, 13, 14).

5. The holder as claimed in any of Claims 1 to 4, **characterised in that** the mechanical coupling devices (9) comprise rivet and/or screw unions.

6. The holder as claimed in any of Claims 1 to 5, **characterised in that** at least one of the fixing means (3) is an anchorage for securing the holder (1) on a motion apparatus, for example an industrial robot.

7. The holder as claimed in any of Claims 1 to 6, **characterised in that** at least on certain fixing means (2), there are secured couplings (4) which serve for securing elongate arms (5) of tubular or profile material; that couplings are disposed on this tubular or profile material; and that these couplings support or are themselves formed as fixing means.

8. A method for manufacturing a holder for positioning a workpiece in relation to a fixed point or another workpiece, the method comprises that the holder (1) is provided with at least one fixing means (2, 3) on which is mounted a fixing device or a fixing apparatus, by means of which the workpiece is positionally fixed or by means of which the holder is fixed for example on a motion apparatus; that starting from lamellar, planar material, planar inner (12, 13, 14) and outer (8) material pieces are cut out, from which the holder is assembled; that the inner material pieces (12, 13, 14) are interconnected to one another and the outer material pieces (8) which are disposed so that they define a substantially closed volume; and that the connections between the material pieces are effected by means of mechanical coupling devices (10, 11) and in particular glue unions wherein at least certain of the mechanical coupling devices (10, 11) are designed as projections or pins (10) fitting in corresponding recesses or apertures (11), which constitute guide means, for the accurate joining together of material pieces (7, 8, 13, 14) included in the holder and fixing means (2, 3), and alignment of the outer material pieces (8), **characterised in that** edge regions of the inner material pieces are connected to the outer material pieces, wherein the projections or pins (10) fit and engage in recesses (11) in the outer material piece, or lid, (8) of the holder.

9. The method as claimed in Claim 8, **characterised in that** the outer material pieces (8) are connected via the glue unions to edge surfaces or edge regions of the inner material pieces (7, 13, 14).

10. The method as claimed in Claim 8 or 9, **characterised in that** the fixing means (2, 3) are interconnected to inner material pieces (7, 13, 14) for the formation of units (16, 18, respectively); that mechanical coupling devices (10, 11) on the units and one of the outer material pieces (8) are employed for positional determination of the units in relation to one another in the plane of the outer material piece.

11. The method as claimed in any of Claims 8 to 10, **characterised in that** at least one of the fixing means is formed as an anchorage (3), by means of which the holder (1) is secured on a motion apparatus, for example an industrial robot.

## Patentansprüche

1. Halter zum Positionieren eines Werkstücks und Fixieren desselben in der Position relativ zu einem festen Punkt oder einem anderen Werkstück, enthaltend mindestens ein Befestigungsmittel (2, 3) zur Anbringung einer Befestigungseinrichtung oder eines Befestigungsgeräts, um das Werkstück in der Position zu fixieren oder den Halter (1) beispielsweise an einer Bewegungsvorrichtung anzubringen, welcher Halter aus einer Anzahl von inneren, miteinander verbundenen, ebenen, lamellenartigen Materialstücken (7, 13, 14) und einer Anzahl von äußeren ebenen, lamellenartigen Materialstücken (8) aufgebaut ist, die miteinander und mit den inneren Materialstücken verbunden sind und zusammen ein im Wesentlichen geschlossenes Volumen definieren, und wobei die Verbindungen zwischen den einzelnen Materialstücken mechanische Kopplungseinrichtungen (9, 10, 11) und insbesondere Klebeverbindungen aufweisen, wobei mindestens bestimmte der mechanischen Kopplungseinrichtungen Vorsprünge oder Stifte (10) aufweisen, die in entsprechende Ausnehmungen oder Öffnungen (11) passen, welche Führungsmittel für die exakte Verbindung der in dem Halter enthaltenen Materialstücke sowie von Befestigungsmitteln (2, 3) und zur Ausrichtung der äußeren Materialstücke (8) bilden, **dadurch gekennzeichnet, dass** Randbereiche der inneren Materialstücken mit den äußeren Materialstücken verbunden sind, wobei die Vorsprünge oder Stifte (10) in Ausnehmungen (11) in dem äußeren Materialstück oder Deckel (8) des Halters passen.

2. Halter nach Anspruch 1, **dadurch gekennzeichnet, dass** die äußeren Materialstücke (8, 15) durch die Klebeverbindungen mit den Randflächen oder Randbereichen der inneren Materialstücke (7, 13, 14) verbunden sind.

3. Halter nach einem der Ansprüche 2 oder 3, **dadurch gekennzeichnet, dass** die Befestigungseinrichtung (2, 3) jeweils an einer Einheit (16 bzw. 18) angeordnet sind; dass die mechanischen Koppolungseinrichtungen (10, 11) an den Einheiten und eines der äußeren Materialstücke (8) miteinander in Eingriff sind, um die Position der Befestigungsmittel relativ zueinander in der Ebene des äußeren Materialstücks zu bestimmen.

4. Halter nach einem der Ansprüche 1 bis 3, **dadurch gekennzeichnet, dass** das Befestigungsmittel (2, 3) Metallplatten (12, 17) mit einer größeren Materialstärke als die Materialstärke der lamellenartigen Materialstücke (7, 8, 13, 14) aufweist.

5. Halter nach einem der Ansprüche 1 bis 4, **dadurch gekennzeichnet, dass** die mechanischen Kopplungsoinrichtungen (9) Niet- und/oder Schraubverbindungen umfassen.

6. Halter nach einem der Ansprüche 1 bis 5, **dadurch gekennzeichnet, dass** mindestens eines der Befestigungsmittel (3) eine Verankerung zur Befestigung des Halters (1) an einer Bewegungsvorrichtung, beispielsweise einem Industrieroboter, ist.

7. Halter nach einem der Ansprüche 1 bis 6, **dadurch gekennzeichnet, dass** zumindest an bestimmten Befestigungsmitteln (2) Kupplungseinrichtungen (4) befestigt sind, die zur Anbringung von länglichen Armen (5) aus Rohr- oder Profilmaterial dienen; dass die Kupplungseinrichtungen an diesem Rohr- oder Profilmaterial angeordnet sind; und dass diese Kupplungseinrichtungen Befestigungsmittel tragen oder selbst als solche ausgebildet sind.

8. Verfahren zur Herstellung eines Halters zum Positionieren eines Werkstücks relativ zu einem festen Punkt oder einem anderen Werkstück, welches Verfahren enthält: dass der Halter (1) mit mindestens einem Befestigungsmittel (2, 3) versehen ist, an welchem eine Befestigungseinrichtung oder ein Befestigungsgerät angebracht ist, durch welches das Werkstück in seiner Position fixiert wird oder durch welches der Halter beispielsweise an einer Bewegungsvorrichtung fixiert wird; das ausgehend von Lamellenartigem, ebenen Material ebene innere (12, 13, 14) und äußere (8) Materialstücke ausgeschnitten werden, aus welchen der Halter zusammengesetzt ist; dass die inneren Materialstücke (12, 13, 14) miteinander und mit den äußeren Materialstücken (8) verbunden sind, welche so angeordnet sind, dass sie ein im Wesentlichen geschlossenes Volumen bilden; und dass die Verbindungen zwischen den Materialstücken mittels mechanischer Kopplungseinrichtungen (10, 11) und insbesondere Klebeverbindungen bewirkt werden, wobei zumindest bestimmte mechanische Kopplungseinrichtungen (10, 11) als Vorsprunge oder Stifte (10) konstruiert sind, die in entsprechende Ausnehmungen oder Öffnungen (11) passen, welche Führungseinrichtungen für die exakte Verbindung von Materialstücken (7, 8, 13, 14) bilden, die in dem Halter und dem Befestigungsmittel (2, 3) enthalten sind, und für die Ausrichtung der äußeren Materialstücke (8), **dadurch gekennzeichnet, dass** Randbereiche der inneren Materialstücke mit den äußeren Materialstücken verbunden sind, wobei die Vorsprünge oder Stifte (10) in Ausnehmungen (11) in dem äußeren Materialstück oder Deckel (B) des Halters passen und eingreifen.

9. Verfahren nach Anspruch 8, **dadurch gekennzeichnet, dass** die äußeren Materialstücke (8) über Klebeverbindungen mit Randflächen oder Randbereichen der inneren Materialstücke (7, 13, 14) verbunden sind.

10. Verfahren nach Anspruch 8 oder 9, **dadurch gekennzeichnet, dass** die Befestigungsmittel (2, 3) zur Bildung von Einheiten (16 bzw. 18) mit inneren Materialstücken (7, 13, 14) verbunden sind; dass die mechanischen Kopplungseinrichtungen (10, 11) an den Einheiten und eines der äußeren Materialstücke (8) für die Positionsbestimmung der Einheiten relativ zueinander in der Ebene des äußeren Materialstücks verwendet werden.

11. Verfahren nach einem der Ansprüche 8 bis 10, **dadurch gekennzeichnet, dass** mindestens eines der Befestigungsmittel als eine Verankerung (3) ausgebildet ist, durch welche der Halter (1) an einer Bewegungsvorrichtung, beispielsweise einem Industrieroboter, befestigt wird.

## Revendications

1. Support destiné à positionner et à fixer en position une pièce d'oeuvre par rapport à un point fixe ou à une autre pièce d'oeuvre, comprenant au moins un moyen de fixation (2, 3) destiné à monter un dispositif de fixation ou un élément de fixation, afin de fixer en position la pièce d'oeuvre ou de fixer le support (1), par exemple sur un dispositif de déplacement, le support étant composé d'un certain nombre de pièces planes internes d'un matériau lamellaire mutuellement interconnectées (7, 13, 14), et d'un certain nombre de pièces planes externes d'un matériau lamellaire (8) interconnectées l'une à l'autre et aux pièces de matériau lamellaire internes, et définissant ensemble un volume sensiblement fermé, et les liaisons entre les pièces de matériau lamellaire individuelles comprenant des dispositifs de couplage mécaniques (9, 10, 11) et, en particulier, des unions collées, dans lequel au moins certain des dispositifs de couplage mécaniques comprennent des saillies ou broches (10) s'assemblant dans des cavités ou ouvertures correspondantes (11), qui constituent des moyens de guidage, afin de relier ensemble de manière précise des pièces de matériau lamellaire contenues dans le support et des moyens de fixation (2, 3) et d'assurer l'alignement des pièces de matériau lamellaire externes (8), **caractérisé en ce que** des zones de bord des pièces de matériau lamellaire internes sont reliées aux pièces de matériau lamellaire externes, dans lequel les saillies ou broches (10) s'assemblent dans les cavités (11) sur la pièce de matériau externe, ou couvercle, (8) du support et se couplent à ces dernières.

2. Support selon la revendication 1, **caractérisé en ce que** les pièces de matériau lamellaire externes (8, 15) sont, par l'intermédiaire des unions collées, interconnectées aux surfaces de bord ou zones de bord des pièces de matériau lamellaire internes (7, 13, 14).

3. Support selon l'une quelconque des revendications 2 ou 3, **caractérisé en ce que** les moyens de fixation (2, 3) sont disposés chacun sur une unité (respectivement 16, 18,) ; **en ce que** les dispositifs de couplage mécanique (10, 11) sur les unités et l'une des pièces de matériau lamellaire externes (8) sont couplés les uns aux autres afin d'assurer la détermination de position des moyens de fixation l'un par rapport l'autre dans le plan de la pièce de matériau lamellaire externe.

4. Support selon l'une quelconque des revendications 1 à 3, **caractérisé en ce que** les moyens de fixation (2, 3) comprennent des plaques métalliques (12, 17) d'une épaisseur de matériau supérieure à l'épaisseur de matériau des pièces de matériau lamellaire (7, 8, 13, 14).

5. Support selon l'une quelconque des revendications 1 à 4, **caractérisé en ce que** les dispositifs de couplage mécanique (9) comprennent des rivets et/ou des unions à vis.

6. Support selon l'une quelconque des revendications 1 à 5, **caractérisé en ce que** au moins l'un des moyens de fixation (3) est un dispositif d'ancrage destiné à fixer le support (1) sur un dispositif de déplacement, par exemple, sur un robot industriel.

7. Support selon l'une quelconque des revendications 1 à 6, **caractérisé en ce qu'**il est fixé, au moins sur certains moyens de fixation (2), des éléments de couplage (4) qui servent à fixer des bras allongés (5) en un matériau tubulaire ou profilé ; **en ce que** ces éléments de couplage sont disposés sur ce matériau tubulaire ou profilé ; et **en ce que** ces éléments de couplage supportent les moyens de fixation ou sont eux mêmes formés comme ces derniers.

8. Procédé de fabrication d'un support destiné à positionner une pièce d'oeuvre par rapport à un point fixe ou à une autre pièce d'oeuvre, le procédé comprend ; le fait que le support (1) comporte au moins un moyen de fixation (2, 3) sur lequel est monté un dispositif de fixation ou un élément de fixation, au moyen duquel la pièce d'oeuvre est fixée en position ou au moyen duquel le support est fixé, par exemple, sur un dispositif de déplacement; le fait que, partant d'un matériau plan lamellaire, des pièces planes en matériau lamellaire internes (12, 13, 14) et externes (8) sont découpées, à partir de quoi le support est assemblé ; le fait que les pièces de matériau lamellaire internes (12, 13, 14) sont interconnectées les unes aux autres et aux pièces de matériau lamellaire externes (8) qui sont disposées de telle sorte qu'elles définissent un volume sensiblement fermé ; et le fait que les liaisons entre les pièces de matériau lamellaire sont assurées au moyen de dispositifs de couplage mécanique (10, 11) et, en particulier, d'unions collées, dans lequel au moins certains des dispositifs de couplage mécaniques (10, 11) sont conçus sous la forme de saillies ou broches (10) s'assemblant dans des cavités ou ouvertures correspondantes (11), qui constituent des moyens de guidage, afin d'assurer la jonction précise ensemble de pièces de matériau lamellaire (7, 8, 13, 14) contenues sur le support et de moyens de fixation (2, 3), et l'alignement des pièces de matériau lamellaire externes (8), **caractérisé en ce que** des zones de bord des pièces de matériau lamellaire internes sont couplées aux pièces de matériau lamellaire externes, dans lequel les saillies ou broches (10) s'assemblent dans des cavités (11) sur les pièces de matériau lamellaire externes, ou couvercle, (8) du support et sont couplées à ces dernières.

9. Procédé selon la revendication 8, **caractérisé en ce que** les pièces de matériau lamellaire externes (8) sont reliées par l'intermédiaire des unions collées aux surfaces de bord ou zones de bord des pièces de matériau lamellaire internes (7, 13, 14).

10. Procédé selon la revendication 8 ou 9, **caractérisé en ce que** les moyens de fixation (2, 3) sont interconnectés à des pièces de matériau lamellaire internes (7, 13, 14) afin d'assurer la formation d'unités (respectivement 16, 18,) ; **en ce que** des dispositifs de couplage mécaniques (10, 11) sur les unités et certaines des pièces de matériau lamellaire externes (8) sont utilisés afin d'assurer la détermination de position des unités par l'une par rapport à l'autre dans le plan de la pièce de matériau lamellaire externe.

11. Procédé selon l'une quelconque des revendications 8 à 10, **caractérisé en ce que** au moins l'un des moyens de fixation est réalisé sous la forme d'un dispositif d'ancrage (3), au moyen duquel le support (1) est fixé sur un dispositif de déplacement, par exemple, sur un robot industriel.
